# EUROPEAN PATENT APPLICATION

(11) **EP 4 261 465 A1**
(43) Date of publication of application: **18.10.2023**
(21) Application number: 23167297.3
(22) Date of filing: 11.04.2023
(51) Int. Cl.: F24F 1/0047, F24F 1/0073

(54) **AIR CONDITIONER**

(30) Priority: 12.04.2022 KR 20220045243
(71) Applicant: LG Electronics Inc., Yeongdeungpo-gu Seoul, 07336 (KR)
(72) Inventor: Yun, Hyeongnam, 08592 Seoul (KR)
(74) Representative: Ter Meer Steinmeister & Partner

(57) **Abstract**

The present disclosure relates to an air conditioner. The air conditioner of the present disclosure includes a case; a base panel which is disposed in one side of the case, and has an inlet into which air flows; an inlet grill which is rotatably disposed in the base panel based on a first rotation shaft, and disposed in a lower side of the inlet; and a first filter which is movably or rotatably disposed in the base panel based on a second rotation shaft, and removes foreign substances in the air flowing into the inlet, wherein the second rotation shaft of the first filter is movably disposed in a front-rear direction in an upper side of the first rotation shaft of the inlet grill.

## Description

### TECHNICAL FIELD

This disclosure relates to an air purifier, and more particularly, to an air conditioner having a filter mounted in a suction port.

### BACKGROUND

An air conditioner may provide heat-exchanged air or filtered air to the indoor space in order to improve the comfort of the indoor space.

The air conditioner may be installed in a floor installation method, a wall mounting method, or a ceiling mounting method according to an environment of an indoor space.

The air conditioner installed on a ceiling is difficult to work because a user needs to work at the height of the ceiling in order to replace or repair a filter or the like. In addition, when separating a plurality of fabrications disposed in the air conditioner, it is cumbersome to individually separate each of the fabrications. In addition, in order to separate a fabrication disposed in the upper side among the fabrications disposed in the up-down direction, it is cumbersome to remove the entire fabrication.

Publication KR2022-0023197A discloses a structure for separating an inlet grill of an air conditioner by using a lifting grill. However, there may be space or cost limitations in such a structure, because a plurality of fabrications are added to the inside of the air conditioner. In addition, in the structure disclosed in the above document, in order to replace a filter or the like, there is still a hassle in that the entire fabrication must be separated because a fabrication such as a suction grill must be separated together from the entire structure of the air conditioner.

### SUMMARY

The disclosure has been made to overcome one or more of the above problems. It is an object of the present disclosure to provide an air conditioner capable of easily replacing an inlet grill or a filter of an air conditioner installed in a high position.

It is an object of the present disclosure to provide an air conditioner capable of separating a plurality of filters disposed inside an air conditioner without separating an inlet grill.

It is an object of the present disclosure to provide an air conditioner capable of individually separating a plurality of filters disposed inside an air conditioner.

At least one of the objects is solved by the features of the independent claim.

In accordance with an aspect of the present disclosure, an air conditioner includes a case; a base panel which is disposed in one side of the case, and has an inlet into which air flows; an inlet grill which is rotatably disposed in the base panel based on a first rotation shaft, and disposed in a lower side of the inlet; and a first filter which is movably (e.g. linearly movably and/or rotatably) disposed in the base panel based on a second rotation shaft, and removes foreign substances in the air flowing into the inlet, wherein the second rotation shaft of the first filter is movably disposed in a front-rear direction in an upper side of the first rotation shaft of the suction panel, so that the second rotation shaft of the first filter may rotate the first filter by moving rearward from a first rotation shaft around which an inlet grill rotates.

In accordance with an aspect of the present disclosure, an air conditioner includes: a case; a base panel which is disposed in one side of the case, and has an inlet into which air flows; an inlet grill which is rotatably disposed in the base panel based on a first rotation shaft; and a first filter which is movably (e.g. linearly movably and/or rotatably) disposed in the base panel based on a second rotation shaft, and removes foreign substances in the air flowing into the inlet; wherein the inlet grill is disposed below the first filter, and wherein the second rotation shaft of the first filter is movably disposed in a front-rear direction in an upper side of the first rotation shaft of the inlet grill.

In accordance with an aspect of the present disclosure, an air conditioner includes: a case; a base panel at one side of the case (e.g. at a lower side or bottom side of the case) and having an inlet allowing air to enter (e.g. to enter the air conditioner or the case); an inlet grill disposed in the base panel and being rotatable about a first rotation shaft; and a first filter disposed in the base panel and being rotatable about a second rotation shaft, the first filter being configured to remove foreign substances in air flowing into the inlet; wherein the second rotation shaft is movable in a direction perpendicular to a rotation axis defined by the second rotation shaft (e.g. movable in front-rear direction) and/or perpendicular to a vertical direction and/or parallel to the base panel (in particular to a surface of the base panel including the inlet) and/or parallel to a (filtering) surface of the first filter. The inlet grill may be disposed below the first filter and/or may cover the first filter.

In accordance with an aspect of the present disclosure, an air conditioner, e.g. a ceiling-type air conditioner, comprises: a case; a base panel which is disposed at one side of the case (e.g. at a lower side or bottom side of the case) and having an inlet allowing air to enter (e.g. to enter the air conditioner or the case); a first filter disposed in the inlet for removing foreign substances in air flowing through the inlet; and an inlet grill for covering the inlet and/or the first filter; wherein the inlet grill has a first rotation shaft to be rotatably supported in the base panel; and wherein the first filter has a second rotation shaft to be rotatably supported in the base panel, the second rotation shaft being movable in a horizontal direction that is perpendicular to a rotation axis defined by the second rotation shaft (e.g. movable in front-rear direction). The inlet grill may be disposed below the first filter.

The air conditioner according to any one of these aspects may include one or more of the following features:

Any directional indications, e.g. above, below etc., may refer to a mounted state of the air conditioner, i.e. to an operational state of the air conditioner.

The air conditioner may be a ceiling-type air conditioner, i.e. an air conditioner for being mounted to a ceiling.

The first and/or second rotation shaft may be defined in a horizontal direction. The first and/or second rotation shaft may be spaced apart in vertical direction. The inlet grill may be disposed below the first filter. The first rotation shaft may be disposed below the first filter and/or below the second rotation shaft. The first and/or second rotation shaft may be movable (e.g. slidable) in a horizontal direction.

The base panel may include an outlet allowing air to exit, e.g. to exit the air conditioner or the case. The outlet may be disposed in a front portion of the base panel and/or the inlet may be disposed in a rear portion of the base panel. The inlet grill may be disposed in the inlet and/or to cover the inlet. The inlet grill may be configured to open and close the inlet of the base panel. The inlet grill may have the first rotation shaft to be rotatable supported in the base panel. The first filter may have the second rotation shaft to be rotatable supported in the base panel. The first and/or second rotation shaft may extend parallel to the base panel (in particular to a surface of the base panel including the inlet). The inlet grill may be configured to cover the first filter. The first filter may be disposed in the inlet.

The first rotation shaft and the second rotation shaft may be disposed in parallel. The first rotation shaft may be disposed in front of or adjacent to a first side of the inlet. The first rotation shaft may be disposed (in a mounted state) at a position outside of the inlet, i.e. at a position not overlapping or not facing the inlet. The first rotation shaft may be movable in the horizontal direction between a first position (in the mounted state and/or being outside of the inlet) to a second position overlapping the inlet. The second rotation shaft may be movable in the horizontal direction between a first position (in the mounted state and/or being outside of the inlet) to a second position overlapping the inlet. The second rotation shaft may be disposed above the first rotation shaft. The second rotation shaft may be disposed to be movable rearward than the first rotation shaft. That is, the second rotation shaft may be movable closer towards a vertical center line or to the second side of the inlet opposite to the first side, than the first rotation shaft. Thus, in a state in which the inlet grill is rotated, the second rotating shaft may be moved to rotate the first filter.

A first guide groove for guiding movement of the second rotation shaft of the first filter may be formed in the base panel. The first guide groove may have a structure inclined downward as it progresses toward a rear side from a front end portion. Thus, the first filter can be easily slid rearward.

A shaft groove that is recessed downward to restrict a rearward movement of the second rotation shaft of the first filter may be formed in the first guide groove. Thus, movement of the second rotation shaft of the first filter may be temporarily restricted.

The shaft groove may be spaced apart rearward than the first rotation shaft at a certain interval. Thus, the first filter may rotate in a rear side of the first rotation shaft. The shaft groove may define the first position of the second rotation shaft. The shaft groove may be at a position facing or overlapping the inlet.

A bump protruding upward to restrict a rearward movement of the second rotation shaft of the first filter may be disposed in the first guide groove. Thus, the movement of the second rotation shaft of the inlet grill may be temporarily restricted.

The first guide groove may have a groove formed in an up-down direction and/or may extend in the forward and backward directions. The first guide groove may include a first sliding groove in which a space for forming a groove expands in an up-down direction as it progresses from a front end portion toward a rear. The first guide groove may include an opening groove portion which extends in vertical direction and has an opening formed in a lower side, e.g. to insert the second rotation shaft thereinto or to remove the second rotation shaft therefrom. The first guide groove may include further a first bending groove in which a space for forming a groove is reduced in an up-down direction as it progresses from the first sliding groove toward a rear; and an opening groove portion in which a space for forming a groove extends in an up-down direction as it progresses from the first bending groove toward a rear, and which has an opening formed in a lower side. Thus, the second rotation shaft may move rearward through the first sliding groove, the rearward movement may be temporarily restricted through the first bending groove, and the first filter may be separated from the base panel through an opening groove portion.

The first filter may include a filter frame and a filter net disposed in the filter frame to remove foreign substances in a flowing air. The filter frame may include an outer frame forming an air flow hole therein, an inner frame which is disposed inside the outer frame and supports a disposition of the filter net, and a shaft protrusion which extends to an outside of the outer frame and extends along the second rotation shaft. The shaft protrusion may be configured to move along the first guide groove. The shaft protrusion may form part of or may be the second rotation shaft.

The filter frame may further include a filter hook for maintaining the first filter mounted in the base panel. The filter hook may be configured to engage with the base panel, in particular with a groove formed in the base panel. The filter hook may be disposed to be spaced apart from the shaft protrusion in a front-rear direction.

The inlet grill may include a cover plate which is disposed in a lower side of the inlet, and has a plurality of suction holes. The inlet grill may further include a grill holder which is disposed in one side of the cover plate, and disposes the cover plate in one side of the base panel. The inlet grill may further include a panel hook which fixes the cover plate to the base panel. The grill holder may include a shaft extending along the first rotation shaft, so that rotation of the shaft may cause the cover plate to rotate. The panel hook may be configured to engage with the base panel, in particular with a groove formed in the base panel. The panel hook may be disposed at one side of the cover plate and the first rotation shaft, e.g. the shaft, may be disposed at the other side opposite to the one side. The shaft may form part of or may be the first rotation shaft. The grill holder and/or the panel hooks may be provided in plurality. Each grill holder may include the shaft, the plurality of shafts forming the first rotation shaft.

The grill holder may have a bracket or hook shape. One end of the grill holder may be connected to the cover plate, the other may be connected to shaft, i.e. the first rotation shaft. The grill holder may further include a first vertical rib protruding upward from one side of the cover plate; a horizontal rib which is bent at an upper end portion of the first vertical rib and extends in a direction away from the cover plate; and a second vertical rib which is bent at a distal end portion of the horizontal rib and extend downward. The shaft may be disposed in a lower end portion of the second vertical rib and/or may extend in a left-right direction.

A grill hanger in which the grill holder is seated in front of the inlet may be disposed in the base panel. Thus, the inlet grill may be maintained to be caught on the base panel.

The grill hanger may include at least one of: a bottom plate in or on which the shaft(s) is seated; a first stopper which restricts a movement of one side of the shaft(s); and a second stopper which restricts a movement of the other side of the shaft(s). A rib groove through which the grill holder, in particular the second vertical rib of the grill holder, passes may be formed in the second stopper, e.g. to prevent or limit a movement of the grill holder in a direction parallel to the shaft and/or to the rotation axis defined by the first rotation shaft. The first and second stopper may extend in parallel to each other with the bottom plate of the grill hanger in between. The grill hanger may be configured to allow a (e.g. gliding or sliding) movement of the shaft, i.e. of the first rotation shaft, in a horizontal direction perpendicular to the shaft and/or to the rotation axis defined by the first rotation shaft, between the first and second stopper. Thus, the second stopper allows movement of the second vertical rib and restricts rearward movement of the shaft(s).

A length of the first vertical rib and/or the second vertical rib may be longer than a length of the second stopper. Thus, in a state where the inlet grill is mounted in the base panel, the horizontal rib may be disposed above the second stopper.

The air conditioner may further include a second filter which is disposed to move or rotate on the base panel or an upper side of the base panel based on a third rotation shaft, and removes foreign substances in the air passed through the first filter. Thus, a second filter that rotates or moves based on the third rotation shaft may be additionally disposed in the upper side of the first filter.

The third rotation shaft may be disposed parallel to the first rotation shaft and/or the second rotation shaft. The first rotation shaft may be disposed in front of the inlet, and/or the third rotation shaft may be disposed above the first rotation shaft and may be movable rearward than the first rotation shaft. Thus, the second filter may be rotated by moving rearward than the rotational position of the inlet grill.

The third rotation shaft may be disposed above the second rotation shaft, and/or may be movable rearward than the second rotation shaft. Thus, the second filter may rotate by moving rearward than the rotational position of the first filter.

The air conditioner may further include a filter housing which is disposed in the upper side of the base panel, and in which the second filter is mounted. A second guide groove for guiding a movement of the third rotation shaft of the second filter may be formed in both sidewalls of the filter housing. Thus, the second filter may move or rotate along the second guide groove in the upper side of the first filter.

The second guide groove may include a second sliding groove extending in a front-rear direction; and a second bending groove having a shape bent upward from a rear side of the second sliding groove. Thus, the second filter may move through the second sliding groove or be restricted in movement by the second bending groove.

A first guide groove for guiding movement of the second rotation shaft of the first filter may be formed in the base panel. The first guide groove may include a first sliding groove in which a space for forming a groove expands in an up-down direction as it progresses from a front end portion toward a rear. The first guide groove may include a first bending groove in which a space for forming a groove is reduced in an up-down direction as it progresses from the first sliding groove toward a rear. A rear end portion of the second sliding groove may be disposed rearward than a rear end portion of the first sliding groove. Thus, the second filter may rotate rearward than the area in which the first filter rotates.

The air conditioner may further include a deodorization filter disposed in an upper side of the second filter. The deodorization filter may be disposed in a rear side of the filter housing. Thus, odors in the air passed through the second filter can be removed.

A rear end portion of the second sliding groove may be disposed in front of the deodorization filter. Thus, when the second filter rotates in the rear end portion of the second sliding groove, the deodorization filter may be exposed downward.

It is noted that the second filter may be omitted. In this case, the air conditioner may further include a deodorization filter disposed above the first filter. The air conditioner may further include a filter housing which is disposed at the upper side of the base panel, and in which the deodorization filter is mounted.

The inlet grill and the first filter (optionally: and at least one of the second filter and the deodorization filter) are disposed one above the other (i.e. in a mounted state) on a line extending in vertical direction and passing through the inlet, in particular on a vertical center line of the inlet.

### BRIEF DESCRIPTION OF THE DRAWINGS

The above and other objects, features and advantages of the present disclosure will be more apparent from the following detailed description in conjunction with the accompanying drawings, in which:

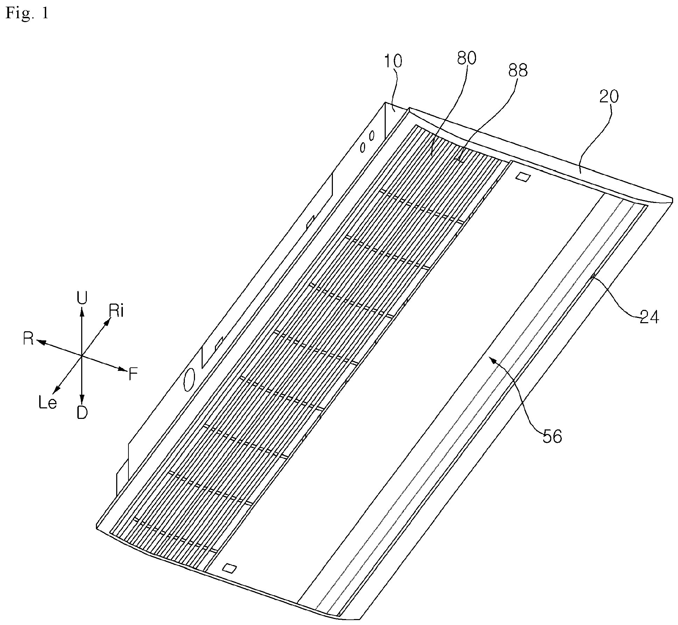

FIG. 1 is a bottom perspective view of an air conditioner according to an embodiment of the present disclosure;

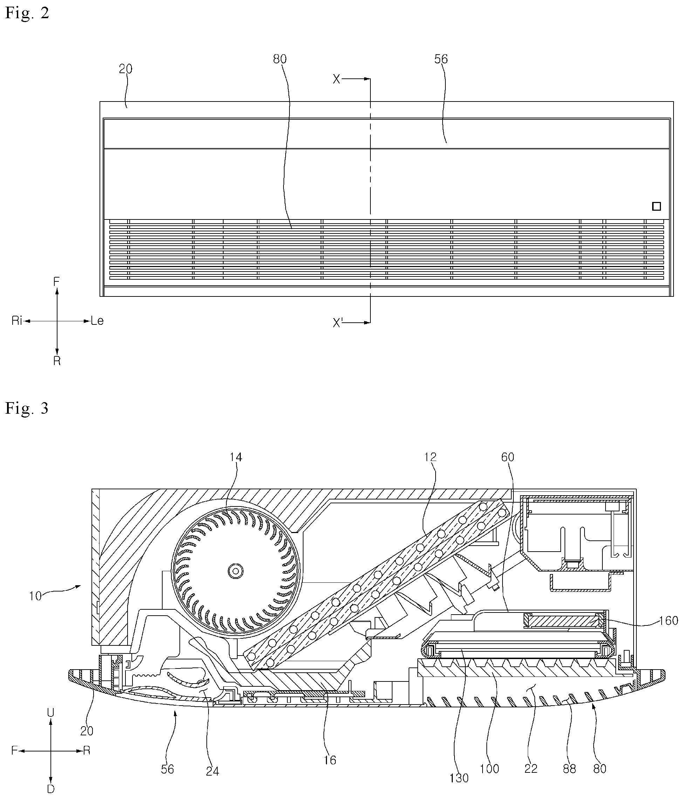

FIG. 2 is a bottom view of an air conditioner according to an embodiment of the present disclosure;
FIG. 3 is a cross-sectional view taken along line X-X' of FIG. 2;
FIG. 4 is a bottom view of a base panel according to an embodiment of the present disclosure;
FIG. 5 is a cross-sectional view taken along line Y-Y' of FIG. 4;
FIG. 6 is a cross-sectional view of FIG. 5 to which a filter housing is added;
FIG. 7 is a bottom view of an inlet grill according to an embodiment of the present disclosure;
FIG. 8 is a perspective view of an inlet grill according to an embodiment of the present disclosure;
FIG. 9 is a side view of an inlet grill according to an embodiment of the present disclosure;
FIG. 10 is a perspective view of a filter frame of a first filter according to an embodiment of the present disclosure;
FIG. 11 is a bottom view of a second filter according to an embodiment of the present disclosure;
FIG. 12 is a perspective view of a second filter according to an embodiment of the present disclosure;
FIG. 13 is a side view of a second filter according to an embodiment of the present disclosure;
FIG. 14 is a view for explaining a state in which the inlet grill, the first filter, and the second filter of the present disclosure are mounted on a base panel and a filter housing;
FIG. 15 is a view for explaining a state in which the disposition of the inlet grill in FIG. 14 is changed;
FIG. 16 is a view for explaining a state in which the disposition of the first filter in FIG. 15 is changed; and
FIG. 17 is a view for explaining a state in which the disposition of the second filter in FIG. 16 is changed.

### DETAILED DESCRIPTION

Advantages and features of the present disclosure and methods of achieving them will become apparent with reference to the embodiments described below in detail in conjunction with the accompanying drawings. However, the present disclosure is not limited to the embodiments disclosed below, but may be implemented in various different forms, and these embodiments are provided only to allow the disclosure of the present disclosure to be complete, and to completely inform those of ordinary skill in the art to which the present disclosure belongs, the scope of the invention, and the present disclosure is only defined by the scope of the claims. Like reference numerals refer to like elements throughout.

Hereinafter, the present disclosure will be described with reference to drawings for explaining an air conditioner according to embodiments of the present disclosure.

**<Overall configuration>**

An air conditioner of the present disclosure includes a case 10 forming a space in which a heat exchanger 12 and a fan 14 are disposed, a base panel 20 that is disposed in the lower side of the case 10 and forms an inlet 22 and an outlet 24, an inlet grill 80 that is rotatably disposed in the base panel 20 and disposed to cover the inlet 22, and a first filter 100 that is detachably disposed in the base panel 20 and removes foreign substances in the air flowing into the inlet 22

The air conditioner includes a filter housing 60 disposed in the upper side of the base panel 20, a second filter 130 detachably disposed in the filter housing 60, and a deodorization filter 160 disposed in the housing 60 at the upper side of the second filter 130.

The case 10 forms a space in which the fan 14 or the heat exchanger 12 is disposed, and has a structure opened downward. A drain fan 14 for collecting condensed water generated in the heat exchanger 12 is disposed in the inner space of the case 10.

The base panel 20 is disposed in the lower side of the case 10.

The inlet 22 through which air flows into the case 10 and the outlet 24 through which heat-exchanged air is discharged are formed in the base panel 20. The inlet 22 may be spaced apart from the outlet 24 in the front-rear direction.

A vane 56 for adjusting a wind direction of air discharged to the outlet 24 is disposed in the base panel 20.

The inlet grill 80 disposed in the lower side where the inlet 22 is formed is disposed in the base panel 20. The inlet grill 80 is formed to be larger than the inlet 22 formed in the base panel 20. A grill mounting portion 52 in which the inlet grill 80 is mounted is formed in the base panel 20. The grill mounting portion 52 may be disposed in the left-right side of the inlet 22 and form a space in which the inlet grill 80 is disposed.

A guide protrusion groove 54 into which a guide protrusion 94 of the inlet grill 80 described below is inserted is formed in the grill mounting portion 52.

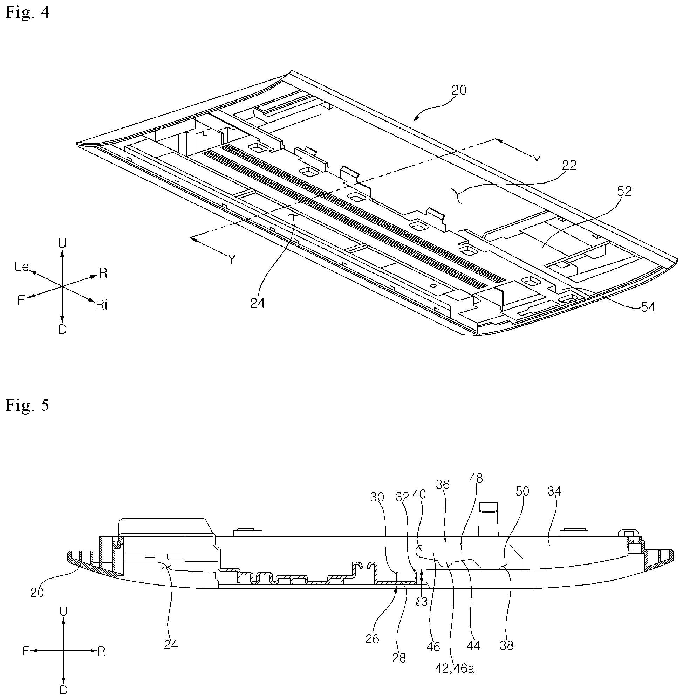

A grill hanger 26 in which a grill holder 90 of the inlet grill 80 described below is mounted is formed in the base panel 20. Referring to FIG. 5, the grill hanger 26 is disposed in front of the inlet 22.

Referring to FIG. 5, the grill hanger 26 includes a bottom plate 28 on which the grill holder 90 is seated, a first stopper 30 that restricts the movement of one side of the grill holder 90, and a second stopper 32 that restricts the movement of the other side of the grill holder 90. A shaft 92 of the grill holder 90 described below is disposed in the bottom plate 28. The first stopper 30 may restrict forward movement of the shaft 92. The second stopper 32 may restrict rearward movement of the shaft 92. The shaft 92 may form the first rotation shaft A1 of the inlet grill (80).

A rib groove (not shown) through which a first vertical rib 90a of the grill holder 90 described below passes may be formed in the second stopper 32.

The base panel 20 includes an inner side wall 34 extending upward from the left and right ends of the inlet 22. A first guide groove 36 into which a shaft protrusion 122 of the first filter 100 described below is inserted is formed in the inner sidewall 34. The shaft protrusion 122 may form the second rotation shaft A2 of the first filter 100.

Referring to FIG. 5, the first guide groove 36 has a structure formed in the front-rear direction on the inner side wall 34. An opening 38 into which the shaft protrusion 122 is inserted may be formed in a rear portion of the first guide groove 36. The opening 38 may have a structure opened in a downward direction.

The shaft protrusion 122 may be inserted through the opening 38 formed in the rear portion of the first guide groove 36. The shaft protrusion 122 inserted into the first guide groove 36 through the opening 38 may move forward.

The first guide groove 36 includes a front end portion 40 for positioning the shaft protrusion 122 so that the first filter 100 is mounted in the base panel 20, a shaft groove 42 for positioning the shaft protrusion 122 to maintain the disposition of the first filter 100 when the first filter 100 is dismounted from the base panel 20, and a bump 44 for restricting the movement of the shaft protrusion 122 of the first filter 100 moving to the rear of the shaft groove 42.

Here, the fact that the first filter 100 is mounted on the base panel 20 means a state where the first filter 100 is disposed to filter out foreign substances in the air flowing into the inlet 22 of the base panel 20.

When the shaft protrusion 122 is disposed in the front end portion 40, the first filter 100 may be set to be positioned at a first position P21. When the shaft protrusion 122 is disposed in the shaft groove 42, the first filter 100 may be set to be positioned at a second position P22.

In the first guide groove 36, a lower line forming a guide groove may be formed inclined downward toward the shaft groove 42 from the front end portion 40. Accordingly, when the first filter 100 is detached from the base panel 20, the shaft protrusion 122 may move naturally from the first position P21 to the second position P22. However, the shaft protrusion 122 moving rearward from the first position P21 may be maintained at the second position P22 by the bump 44.

The first guide groove 36 includes a first sliding groove 46 in which a space in which the groove is formed expands in the up-down direction as it progresses from the front end portion 40 toward the rear, a first bending groove 48 in which the space in which the groove is formed is reduced in the up-down direction as it progresses from the first sliding groove 46 toward the rear, and an opening groove portion 50 in which the space in which the groove is formed expands in the up-down direction as it progresses from the first bending groove 48 toward the rear, and which has the opening 38 formed in the lower side.

The first sliding groove 46 may have a structure in which the height of the lower end portion is deformed while maintaining the height of the upper end portion. Therefore, the first sliding groove 46 may form a structure in which the height of the lower end decreases as it progresses from the front to the rear.

The first bending groove 48 may have a structure in which the height of the lower end portion is deformed while maintaining the height of the upper end portion. Accordingly, the first bending groove 48 may form a structure in which the height of the lower end portion increases as it progresses from the front to the rear.

Referring to FIG. 5, the shaft groove 42 may be disposed rearward than the grill hanger 26. Referring to FIG. 5, the front end portion 40 of the first guide groove 36 may be disposed in the upper side of the grill hanger 26.

A first hook groove (not shown) into which a grill hook 96 of the inlet grill 80 is inserted is formed in the base panel 20.

A second hook groove (not shown) into which a filter hook 126 of the first filter 100 is inserted is formed in the base panel 20.

The filter housing 60 is disposed in the upper side of the base panel 20. In the filter housing 60, the second filter 130 and the deodorization filter 160 may be disposed in the upper side of the base panel 20. The filter housing 60 may be disposed in the upper side of the inlet 22 of the base panel 20. The filter housing 60 forms a space in which the second filter 130 or the deodorization filter 160 is disposed.

The filter housing 60 may have a substantially square frame shape, and may form a space in which the second filter 130 and the deodorization filter 160 are mounted.

A second guide groove 64 into which a fixing protrusion 148 of the second filter 130 described below is inserted is formed in both side walls 62 of the filter housing 60.

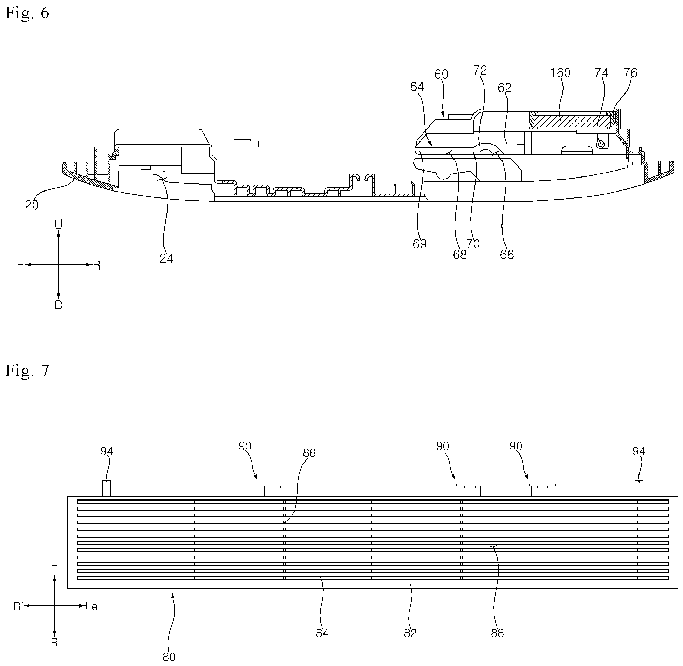

Referring to FIG. 6, the second guide groove 64 may be formed to extend in a front-rear direction. An insertion hole 66 that is opened downward so that the fixing protrusion 148 can be inserted may be formed in the rear end portion of the second guide groove 64.

The second guide groove 64 includes a second sliding groove 68 extending in the front-rear direction and a second bending groove 72 bent upward from the rear of the second sliding groove 68. The insertion hole 66 is disposed in the rear of the second bending groove 72. The second sliding groove 68 may have a straight line extending in the front-rear direction. The second sliding groove 68 may be disposed parallel to the ground or ceiling surface. The second sliding groove 68 may have a shape inclined downward as it progresses toward the rear.

The second bending groove 72 may extend from the rear end portion of the second sliding groove 68, and may restrict the rearward movement of the fixing protrusion 148.

The second guide groove 64 formed in the filter housing 60 may be disposed in the upper side of the first guide groove 36 formed in the base panel 20.

Referring to FIG. 6, the second bending groove 72 is disposed rearward than the bump 44 formed in the first guide groove 36 of the base panel 20. Referring to FIG. 6, the rear end portion 70 of the second sliding groove 68 is disposed rearward than the shaft groove 42. Referring to FIG. 6, the rear end portion 70 of the second sliding groove 68 is disposed rearward than a rear end portion 46a of the first sliding groove 46.

An inner protrusion 74 protruding inward from both side walls 62 of the filter housing 60 are disposed in the filter housing 60 to maintain the state in which the second filter 130 is mounted in the filter housing 60. The inner protrusion 74 is disposed in the rear side of the filter housing 60. When the second filter 130 is mounted in the filter housing 60, a hook body 154 of the second filter 130 described below may be caught on the inner protrusion 74 to fix the disposition. That is, when the second filter 130 is mounted in the filter housing 60, the inner protrusion 74 may be inserted into a second button hole 146 of the second filter 130.

Here, the state in which the second filter 130 is mounted in the filter housing 60 may mean a state in which the inner protrusion 74 is caught on a filter handle 138, 140 of the second filter 130 so that the disposition of the second filter 130 can be maintained.

The second filter 130 may be disposed in a front end portion 69 of the second sliding groove 68 or in a rear end portion 70 of the second sliding groove 68. Here, when the fixing protrusion 148 is positioned in the front end portion 69 of the second sliding groove 68, the second filter 130 may be set to be positioned in a first position P31. In addition, when the fixing protrusion 148 is positioned in the rear end portion 70 of the second sliding groove 68, the second filter 130 may be set to be positioned in a second position P32. When the second filter 130 moves rearward from the first position P31, the disposition in the second position P32 may be maintained by the second bending groove 72.

In the filter housing 60, a filter mounting portion 76 to which the deodorization filter 160 is mounted is disposed. The filter mounting portion 76 is disposed in the upper side of the second guide groove 64 of the filter housing 60. The filter mounting portion 76 is disposed rearward than the second guide groove 64 of the filter housing 60. The filter mounting portion 76 is disposed rearward than the second sliding groove 68 of the second guide groove 64 of the filter housing 60. Accordingly, the deodorization filter 160 may be withdrawn from the filter housing 60 in a state where the fixing protrusion 148 of the second filter 130 is disposed in the second position P32.

The filter housing 60 may be formed as one body with the base panel 20. Accordingly, the first guide groove 36 and the second guide groove 64 may be disposed vertically on the inner sidewall 34 of the base panel 20.

Hereinafter, the inlet grill 80 of the present disclosure will be described with reference to FIGS. 7 to 9.

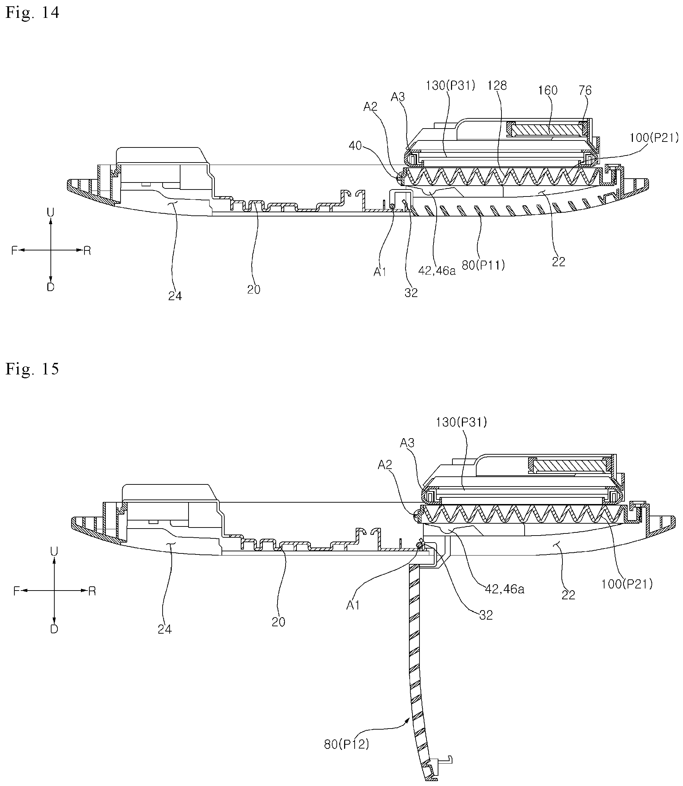

The directions of the up(U), down(D), left(Le), right (Ri), front (F), and rear (R) of the inlet grill 80 described below are set based on a state in which the inlet grill 80 is mounted in the base panel 20. Here, the state in which the inlet grill 80 is mounted in the base panel 20 may mean a state in which the inlet grill 80 covers the inlet 22 as shown in FIG. 14. The state in which the inlet grill 80 is mounted in the base panel 20 may be a state in which the grill hook 96 of the inlet grill 80 described below is inserted into the base panel 20.

The inlet grill 80 includes a plurality of first ribs 84 that extends in the left-right direction and are spaced apart in the front-rear direction and a plurality of second ribs 86 disposed perpendicularly to each of the plurality of first ribs 84.

A suction hole 88 through which air flows into the inlet 22 is formed between the plurality of first ribs 84. The plurality of first ribs 84 may have a shape inclined upward in a forward direction. Accordingly, air flowed through the suction hole 88 may flow toward the front side by the plurality of first ribs 84.

The separated distance between the plurality of first ribs 84 is smaller than the separated distance between the plurality of second ribs 86.

The inlet grill 80 includes a cover plate 82 that is disposed in the lower side of the inlet 22 and has a plurality of suction holes 88 formed therein, a grill holder 90 that is disposed in one side of the cover plate 82 and disposes the cover plate 82 in one side of the base panel 20, a guide protrusion 94 for guiding the movement of the cover plate 82 rotating from the base panel 20, and a grill hook 96 fixing the cover plate 82 to the base panel 20.

The cover plate 82 may include the plurality of first ribs 84 and the plurality of second ribs 86.

The grill holder 90 is disposed in the front end portion of the cover plate 82. The grill holder 90 is disposed in the grill hanger 26 of the base panel 20.

Referring to FIGS. 7 to 8, the inlet grill 80 includes a plurality of grill holders 90 spaced apart in the left-right direction.

The grill holder 90 extends outward from the cover plate 82. When viewed from the side, the grill holder 90 may have a 'c' shape. A shaft 92 forming a rotation shaft for rotating the inlet grill 80 is disposed in a distal end of the grill holder 90. The shaft 92 has a structure extending in the left- right direction. A first rotation shaft A1 in which the inlet grill 80 rotates is formed in a direction in which the shaft 92 extends.

The grill holder 90 includes a first vertical rib 90a protruding upward from one side of the inlet grill 80, a horizontal rib 90b that is bent at the upper end portion of the first vertical rib 90a and extends in a direction away from the inlet grill 80, a second vertical rib 90c bent at a distal end of the horizontal rib 90b and extends downward, and a shaft 92 that is disposed in the lower end portion of the second vertical rib 90c and extends in the left-right direction.

Referring to FIG. 7, the grill holder 90 may include a pair of first vertical ribs 90a spaced apart in the left-right direction, a pair of horizontal ribs 90b, and a pair of second vertical ribs 90c. Each of the pair of second vertical ribs 90c may be connected to a shaft 92 extending in the left-right direction.

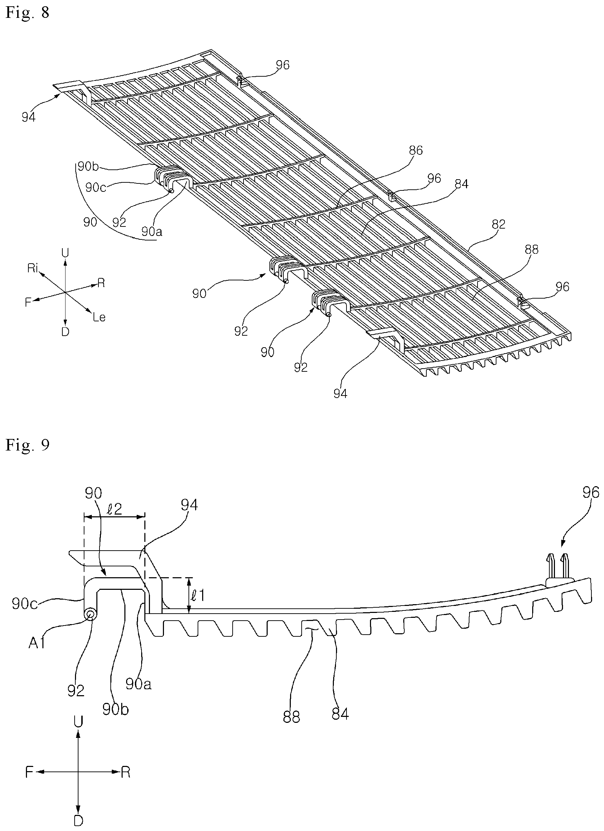

Referring to FIG. 9, the length 11 of the first vertical rib 90a or the second vertical rib 90c is shorter than the length l2 of the horizontal rib 90b. The length 11 of the first vertical rib 90a or the second vertical rib 90c may be longer than the length l3 of the second stopper 32 formed in the base panel 20 (see FIG. 5).

The shaft 92 may be movably disposed in the base panel 20. The shaft 92 may be rotatably disposed in the base panel 20. The shaft 92 may be moved in the front-rear direction or rotated while being disposed in the grill hanger 26 formed in the base panel 20.

The inlet grill 80 includes a guide protrusion 94 for guiding rotation of the cover plate 82. The guide protrusion 94 is disposed adjacent to the left and right outer edges of the inlet grill 80 than the grill holder 90. The guide protrusion 94 may prevent the inlet grill 80 from moving in the left-right direction when the inlet grill 80 rotates.

The inlet grill 80 includes the grill hook 96 that maintains the state in which the inlet grill 80 is mounted in the base panel 20. The grill hook 96 may be disposed opposite to the grill holder 90. Referring to FIGS. 8 to 9, the grill hook 96 may be disposed in the rear end portion of the inlet grill 80. The inlet grill 80 may include a plurality of grill hooks 96 spaced apart in the left-right direction. Referring to FIGS. 8 to 9, a plurality of grill hooks 96 may be disposed at regular intervals in the front-rear direction.

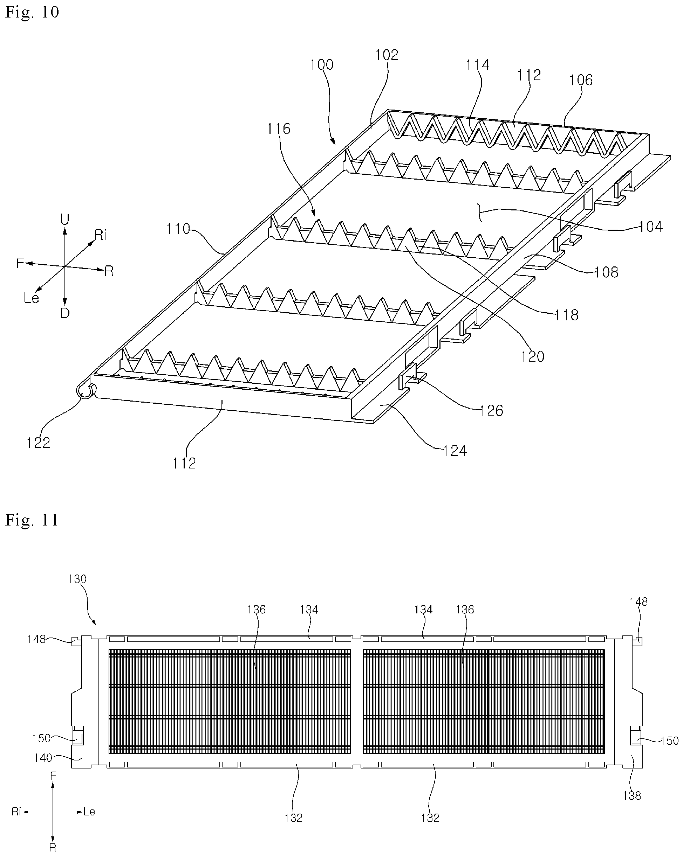

Hereinafter, the first filter 100 will be described with reference to FIG. 10.

The directions of the up(U), down(D), left(Le), right (Ri), front (F), and rear (R) of the first filter 100 described below are set based on a state in which the first filter 100 is mounted in the base panel 20. Here, the state in which the first filter 100 is mounted in the base panel 20 may mean a state in which the first filter 100 is disposed in the inlet 22, as shown in FIG. 14. The state in which the first filter 100 is mounted in the base panel 20 may be a state in which the grill hook 96 of the first filter 100 described below is inserted into the base panel 20. The state in which the first filter 100 is mounted in the base panel 20 may be a state in which the shaft protrusion 122 of the first filter 100 described below is disposed in the front end portion 40 of the first guide groove 36 formed in the base panel 20.

The first filter 100 may include a filter frame 102 and a filter net 128 (see FIG. 14). The first filter 100 may be a pre-filter that primarily filters foreign substances in the air passing through the inlet grill. The filter frame 102 includes an outer frame 106 forming an air flow hole 104 therein, an inner frame 116 that is disposed inside the outer frame 106 and supports the disposition of the filter net 128, a shaft protrusion 122 that extends to the outside of the outer frame 106 and forms a shaft around which the first filter 100 rotates, and a filter hook 126 for maintaining the state in which the first filter 100 is mounted in the base panel 20.

The first filter 100 is disposed to cover the inlet 22 formed in the base panel 20. Thus, air passing through the inlet 22 may pass through the first filter 100.

The filter frame 102 may have a rectangular frame shape to be disposed in the inlet 22. The filter frame 102 may include a pair of side walls 112 spaced apart in the left-right direction, a front wall 108 disposed in the front end portion of each of the pair of side walls 112, and a rear wall 110 disposed in the rear end portion of each of the pair of side walls 112.

A pair of shaft protrusions 122 protruding in an outward direction are disposed in the front end portion of each of the pair of side walls 112. Here, the outward direction may mean a direction to which the outer circumferential surface of each of the pair of side walls 112 faces. A support rib 114 supporting the disposition of the filter net 128 disposed in a zigzag pattern may be disposed on inner circumferential surface of each of the pair of side walls 112.

The inner frame 116 has a structure extending in the front-rear direction from the inside of the outer frame 106. A plurality of inner frames 116 spaced apart in the left-right direction inside the outer frame 106 may be provided.

Each of the plurality of inner frames 116 is connected to the front wall 108 at one side and to the rear wall 110 at the other side. Each of the plurality of inner frames 116 includes a frame bar 118 extending in the front-rear direction, and a filter net fixing rib 120 for maintaining the shape of the filter net 128 disposed in the frame bar 118. The filter net fixing rib 120 may have a shape corresponding to the support rib 114. The filter net fixing rib 120 may maintain the filter net 128 disposed inside the filter frame 102 to be disposed in a zigzag pattern in the front-rear direction.

The shaft protrusion 122 may rotate the first filter 100 while being disposed in the first guide groove 36 of the base panel 20. The shaft protrusion 122 may act as a rotation shaft around which the first filter 100 rotates. Referring to FIG. 10, the shaft protrusion 122 may have a structure extending in an outward direction from both end portions of the front wall 108.

The shaft protrusion 122 is inserted into the opening 38 of the first guide groove 36 formed in the base panel 20. The shaft protrusion 122 may be disposed in the front end portion 40 or the shaft groove 42 of the first guide groove 36 formed in the base panel 20.

The filter hook 126 may be disposed in a rear of the first filter 100. Referring to FIG. 10, the filter hook 126 is disposed rearward than the rear wall 110 of the filter frame 102. The filter hook 126 may be disposed rearwardly spaced from the rear wall 110. Referring to FIG. 10, the filter hook 126 may be disposed in a spacing plate 124 extending rearward from the rear wall 110. The filter hook 126 may have a structure protruding upward from the spacing plate 124. The filter hook 126 may be inserted into a second hook groove of the base panel 20 to fix the disposition of the first filter 100.

The filter net 128 may be disposed in a zigzag pattern in the filter frame 102. Therefore, the removal performance of foreign matter in the air can be enhanced by increasing the contact area with the air flowing into the inlet 22.

Hereinafter, the second filter 130 of the present disclosure will be described with reference to FIGS. 11 to 13.

The directions of the up(U), down(D), left(Le), right (Ri), front (F), and rear (R) of the second filter 130 described below are set based on a state in which the second filter 130 is mounted in the filter housing 60. Here, the state in which the second filter 130 is mounted in the filter housing 60 may mean a state in which the second filter 130 is disposed in the inlet 22, as shown in FIG. 14. The state in which the second filter 130 is mounted in the filter housing 60 may be a state in which the second filter 130 described below is disposed parallel to the first filter 100 in the upper side of the first filter 100.

The second filter 130 may use an electric dust collector that secondarily filters foreign substances in the air that passed through the first filter 100.

The second filter 130 includes at least one filter body 132 for collecting dust particles in the air, a first filter handle 138 that is disposed in one side of the filter body 132 and fixes the disposition of the filter body 132 to the filter housing 60, and a second filter handle 140 that is disposed in the other side of the filter body 132 and fixes the disposition of the filter body 132 to the filter housing 60.

A plurality of filter bodies 132 may be disposed between the first filter handle 138 and the second filter handle 140.

The filter body 132 includes a filter case 134 that forms an outer shape and is opened to allow air to flow in the height direction of the filter body, and a plurality of electric dust collection films 136 that are spaced apart from each other inside the filter case 134 and collect dust particles in the air.

The second filter 130 includes a first filter handle 138 and a second filter handle 140. The first filter handle 138 and the second filter handle 140 may have a symmetrical structure in the left-right direction.

Each of the first filter handle 138 and the second filter handle 140 may include a handle cover 142 connected to the filter body 132, a fixing protrusion 148 that is disposed in one side of the handle cover 142 and caught on the filter housing 60, and a filter button 150 for fixing the handle cover 142 to the filter housing 60 or releasing the handle cover 142 from the filter housing 60.

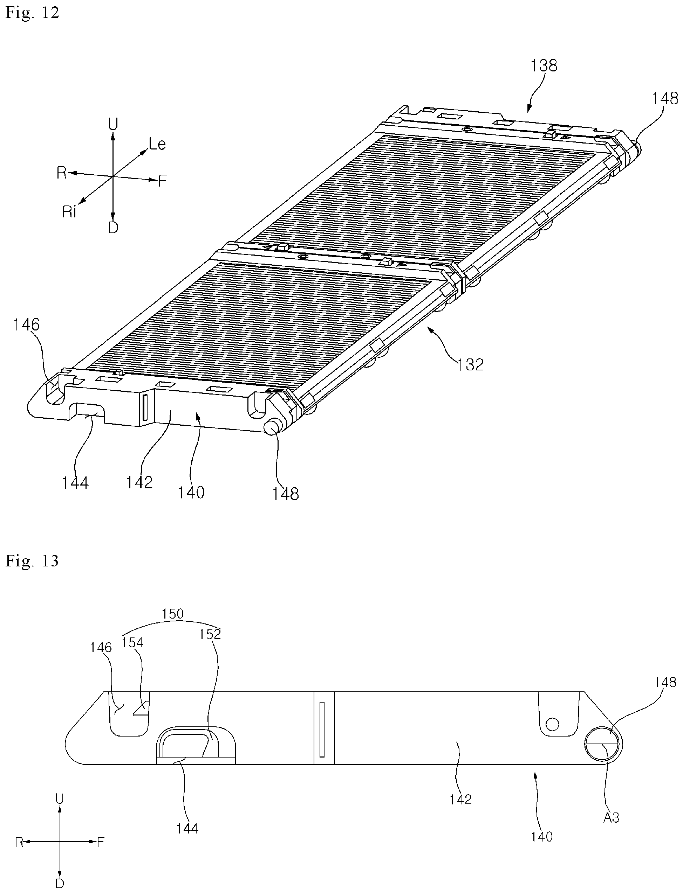

Referring to FIG. 13, the fixing protrusion 148 may be disposed in the front of the handle cover 142, and the filter button 150 may be disposed in the rear of the handle cover 142.

In the handle cover 142, a first button hole 144 that is formed in the lower surface of the handle cover 142 and exposes some components of the filter button 150, and a second button hole 146 that is formed in the upper surface of the handle cover 142 and exposes other components of the filter button 150 may be formed.

A press body 152 of the filter button 150 may be disposed in the first button hole 144. A hook body 154 of the filter button 150 may be disposed in the second button hole 146. The press body 152 and the hook body 154 may be formed as one body, so that the disposition can be changed identically. Therefore, when a user applies pressure to the press body 152, the disposition of the hook body 154 may also move in the direction in which the press body 152 moves.

The filter button 150 includes an elastic body (not shown) that restores the disposition of the press body 152 when no external force is applied to the press body 152.

When no external force is applied to the press body 152, the disposition of the press body 152 and the hook body 154 may be determined by the elastic body. That is, the elastic body may be disposed inside the handle cover 142, and may maintain the disposition of the press body 152 and the hook body 154. When only the elastic body applies force to the press body 152, the hook body 154 may be disposed to be caught on one side of the filter housing 60. Therefore, the hook body 154 is disposed in the upper side of the inner protrusion 74, so that the second filter 130 can be fixedly disposed inside the filter housing 60.

However, when a user or the like presses the press body 152, the disposition of the hook body 154 may be changed. When the press body 152 is applied with a pressure in the opposite direction to the elastic force of the elastic body, the hook body 154 may be released. When the press body 152 is applied with a pressure in the opposite direction to the elastic force of the elastic body, the hook body 154 is not disposed in the upper side of the inner protrusion 74, so that one side of the second filter 130 may be released from the filter housing 60.

The second filter 130, when viewed from the side, may have a trapezoidal shape in which the length in the front-rear direction becomes narrower toward the upper side. Accordingly, it may be freely rotated in the downward direction of the filter housing 60 based on the fixing protrusion 148.

In the second filter 130, the filter body 132, the first filter handle 138, and the second filter handle 140 may be formed as one body. Accordingly, the filter body 132 may include each of the first filter handle 138 and the second filter handle 140. Accordingly, in both sides of the filter body 132, the fixing protrusion 148 may be formed and the filter button 150 fixed to the filter housing 60 may be disposed. In addition, the filter case 134 may include a handle cover 142 of each of the first filter handle 138 and the second filter handle 140. In both sides of the filter case 134, the fixing protrusions 148 may be formed and the filter button 150 fixed to the filter housing 60 may be disposed.

Hereinafter, the inlet grill 80, the first filter 100, and the second filter 130 whose dispositions are changed will be described with reference to FIGS. 14 to 17. Referring to FIG. 14, each of the inlet grill 80, the first filter 100, and the second filter 130 may be mounted in the base panel 20 or the filter housing 60. Referring to FIG. 14, the inlet grill 80 may be disposed below the inlet 22 to cover the inlet 22. The inlet grill 80 may be disposed in a first position P11 of the inlet grill 80 in which the grill hook 96 is mounted in the first hook groove of the base panel 20.

At the first position P11 of the inlet grill 80, the shaft 92 of the inlet grill 80 may be spaced forward from the second stopper 32. At the first position P11 of the inlet grill 80, the grill hook 96 of the inlet grill 80 may be inserted into the first hook groove of the base panel 20.

At the first position P11 of the inlet grill 80, the inlet grill 80 may be disposed substantially parallel to the ground.

Referring to FIG. 14, the first filter 100 may be disposed to filter out foreign substances in the air flowing through the inlet 22. The first filter 100 may be disposed in a first position P21 of the first filter 100 where the filter hook 126 is inserted into the second hook groove of the base panel 20.

At the first position P21 of the first filter 100, the shaft protrusion 122 of the first filter 100 may be disposed in the front end portion 40 of the first guide groove 36. At the first position P21 of the first filter 100, the filter hook 126 of the first filter 100 may be inserted into the second hook groove of the base panel 20. When the first filter 100 is disposed in the first position P21, the air flowing into the inlet 22 may flow upward through the first filter 100.

At the first position P21 of the first filter 100, the first filter 100 may be disposed substantially parallel to the ground.

Referring to FIG. 14, the second filter 130 may be disposed to filter out foreign substances in the air flowing through the inlet 22. The second filter 130 may be disposed in a first position P31 of the second filter 130 where the hook body 154 of the filter button 150 is disposed above the inner protrusion 74 of the filter housing 60.

At the first position P31 of the second filter 130, the fixing protrusion 148 of the second filter 130 is disposed in the front end portion 69 of the second guide groove 64. At the first position P31 of the second filter 130, the second filter 130 can be maintained fixed to the filter housing 60 by the hook body 154 of the second filter 130. The second filter 130 may remove foreign substances in the air flowing upward through the inlet 22 at the first position P31.

At the first position P31 of the second filter 130, the second filter 130 may be disposed substantially parallel to the ground.

Referring to FIG. 14, in a state where each of the inlet grill 80, the first filter 100, and the second filter 130 is mounted in the base panel 20 or the filter housing 60, the air flowing into the case 10 may sequentially pass through the inlet grill 80, the first filter 100, and the second filter 130.

Referring to FIG. 15, each of the first filter 100 and the second filter 130 is mounted in the base panel 20 or filter housing 60, and the inlet grill 80 may maintain a state of being caught on the base panel 20.

Here, the state in which the inlet grill 80 is caught on the base panel 20 may mean a state in which the grill hook 96 of the inlet grill 80 is separated from the first hook groove of the base panel 20.

Referring to FIG. 15, the disposition of the first filter 100 and the second filter 130 is the same as that of FIG. 14.

Referring to FIG. 15, the grill holder 90 of the inlet grill 80 is disposed above the grill hook 96. The inlet grill 80 may be disposed in the second position P12 of the inlet grill 80 where the grill hook 96 is separated from the first hook groove of the base panel 20.

At the second position P12 of the inlet grill 80, the shaft 92 of the inlet grill 80 may be disposed to contact the second stopper 32. That is, when the inlet grill 80 is changed from the first position P11 to the second position P12, the shaft 92 formed along the first rotation shaft A1 may move rearward. At the second position P12 of the inlet grill 80, the grill hook 96 of the inlet grill 80 may be separated from the first hook groove of the base panel 20.

At the second position P12 of the inlet grill 80, the inlet grill 80 may be disposed forward than the shaft groove 42 of the first guide groove 36. At the second position P12 of the inlet grill 80, the inlet grill 80 may be disposed substantially perpendicular to the ground.

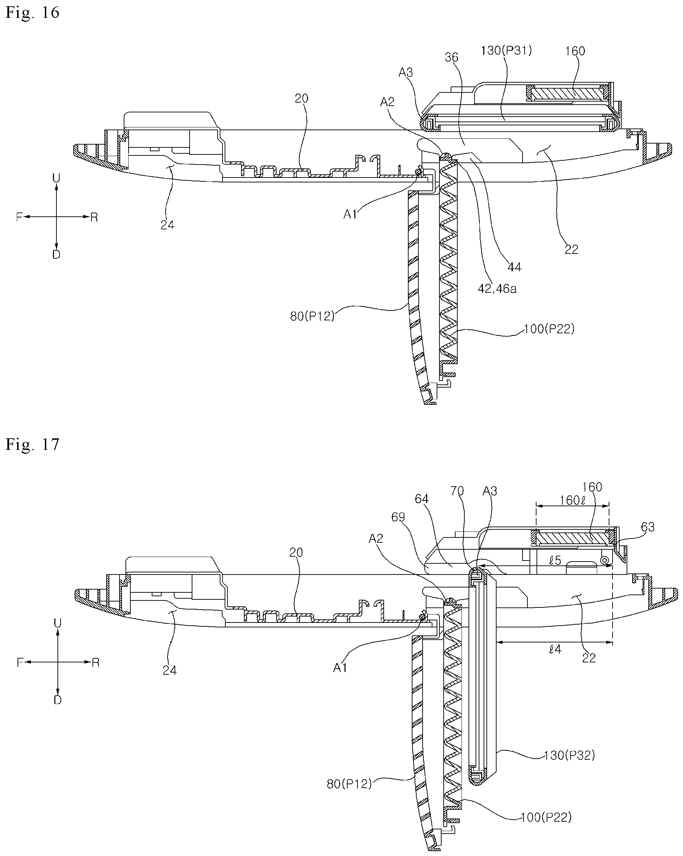

Referring to FIG. 16, the second filter 130 is mounted in the base panel 20 or the filter housing 60, and the first filter 100 and the inlet grill 80 may maintain a state of being caught on the base panel 20.

Here, the state in which the first filter 100 is caught on the base panel 20 may mean a state in which the filter hook 126 of the first filter 100 is separated from the first hook groove of the base panel 20.

Referring to FIG. 16, the disposition of the second filter 130 is the same as that of FIG. 15. Referring to FIG. 16, the disposition of the inlet grill 80 is the same as that of FIG. 15.

Referring to FIG. 16, the shaft protrusion 122 of the first filter 100 is disposed above the filter hook 126. The first filter 100 may be disposed in the second position P22 of the first filter 100 where the filter hook 126 is separated from the second hook groove of the base panel 20.

At the second position P22 of the first filter 100, the shaft protrusion 122 of the first filter 100 may be disposed in the shaft groove 42 of the first guide groove 36. At the second position P22 of the first filter 100, the shaft protrusion 122 of the first filter 100 may be disposed in the rear end portion 46a of the first sliding groove 46. That is, when the first filter 100 is changed from the first position P11 to the second position P12, the shaft protrusion 122 forming a second rotation shaft A2 may move from the front end portion 40 of the first guide groove 36 to the shaft groove 42.

When the first filter 100 is changed from the first position P21 to the second position P22, the shaft protrusion 122 forming the second rotation shaft A2 may move from the front end portion 40 of the first sliding groove 46 to the rear end portion 46a.

At the second position P22 of the first filter 100, the filter hook 126 of the first filter 100 may be separated from the second hook groove of the base panel 20.

At the second position P22 of the first filter 100, the first filter 100 may be disposed rearward than the inlet grill 80. Therefore, even if each of the inlet grill 80 and the first filter 100 is maintained in a state of being caught on the base panel 20, interference between the dispositions of the inlet grill 80 and the first filter 100 does not occur. At the second position P22 of the first filter 100, the first filter 100 may be disposed substantially perpendicular to the ground.

Referring to FIG. 17, each of the inlet grill 80, the first filter 100, and the second filter 130 may maintain a state of being caught on the base panel 20 or the filter housing 60.

Here, the state in which the second filter 130 is caught on the base panel 20 or the filter housing 60 may mean a state where the hook body 154 of the second filter 130 is separated from the inner protrusion 74 of the filter housing 60.

Referring to FIG. 17, the disposition of the inlet grill 80 and the first filter 100 is the same as that of FIG. 16.

Referring to FIG. 17, the fixing protrusion 148 of the second filter 130 is disposed above the filter button 150. In the first filter 100, the filter button 150 may be disposed from the inner protrusion 74 of the filter housing 60 to the second position P32 of the second filter 130.

At the second position P32 of the second filter 130, the fixing protrusion 148 of the second filter 130 may be disposed in the rear end portion 70 of the second sliding groove 68. At the second position P32 of the second filter 130, the fixing protrusion 148 of the second filter 130 may be disposed in front of the second bending groove 72. That is, when the second filter 130 is changed from the first position P31 to the second position P32, the protrusion 148 forming a third rotation shaft A3 may move rearward from the front end portion 69 of the second guide groove 64. When the second filter 130 is changed from the first position P31 to the second position P32, the fixing protrusion 148 forming the third rotation shaft A3 may move from the front end portion 69 to the rear end portion 70 of the second sliding groove 68.

At the second position P32 of the second filter 130, the filter button 150 of the second filter 130 may be separated from the second hook groove of the base panel 20.

At the second position P32 of the second filter 130, the second filter 130 may be disposed rearward than the first filter 100 or the inlet grill 80. Therefore, even if each of the inlet grill 80, the first filter 100, and the second filter 130 is maintained in a state of being caught on the base panel 20 or the filter housing 60, interference between the dispositions of the inlet grill 80, the first filter 100, and the second filter 130 does not occur. At the second position P32 of the second filter 130, the second filter 130 may be disposed substantially perpendicular to the ground.

Referring to FIG. 17, at the second position P32 of the second filter 130, the distance l4 between the second filter 130 and the rear wall 63 of the filter housing 60 is formed longer than the length 160l of the deodorization filter 160 formed in the front-rear direction. Referring to FIG. 17, the distance 15 between the rear end portion 70 of the second sliding groove 68 formed in the filter housing 60 and the rear wall 63 of the filter housing 60 is formed longer than the length 160l of the deodorization filter 160 formed in the front-rear direction.

According to the air conditioner of the present disclosure, there are one or more of the following effects.

First, it has a structure in which the rotation shaft of the filter disposed in the upper side of the inlet grill can move, so that the filter can be easily mounted on the base panel through sliding and rotation of the filter.

Second, it has a structure in which the first filter disposed in the upper side of the inlet grill can rotate while moving along the sliding groove, so that the first filter can be separated or coupled to the base panel by moving and rotating the first filter while the inlet grill is rotated. This has the advantage that the first filter can be separated or coupled without separating the inlet grill from the base panel.

Third, the moving area and range of the rotation shaft of each of the first filter and the second filter disposed in the upper side of the inlet grill are different, so that the second filter is moved and rotated while the first filter is caught on the base panel to move upward, thereby being separated or coupled to the upper side of the base panel. This has the advantage that the second filter can be separated or coupled without separating the inlet grill or the first filter from the base panel.

Fourth, it has a structure in which the deodorizing filter disposed in the upper side can be exposed while the second filter is rotated, so that only the deodorizing filter can be separately separated or coupled while the first or second filter is caught on the base panel.

Although the present disclosure has been described with reference to specific embodiments shown in the drawings, it is apparent to those skilled in the art that the present description is not limited to those exemplary embodiments and is embodied in many forms without departing from the scope of the present disclosure, which is described in the following claims. These modifications should not be individually understood from the technical scope of the present disclosure.

## Claims

1. An air conditioner comprising:
a case (10);
a base panel (20) at one side of the case (10) and having an inlet (22) allowing air to enter;
an inlet grill (80) for covering the inlet (22), the inlet grill (80) having a first rotation shaft (A1) to rotatably support the inlet grill (80) in the base panel (20); and
a first filter (100) for removing foreign substances in air flowing through the inlet (22), the first filter (100) having a second rotation shaft (A2) to rotatably support the first filter (100) in the base panel (20);
wherein the inlet grill (80) is disposed below the first filter (100),
wherein the second rotation shaft (A2) of the first filter (100) is movable in a first horizontal direction that is perpendicular to a rotation axis defined by the second rotation shaft (A2).

2. The air conditioner of claim 1, wherein the first rotation shaft (A1) and the second rotation shaft (A2) extend in parallel,
the first rotation shaft (A1) is disposed adjacent to a first side of the inlet (22), and
the second rotation shaft (A2) is disposed above the first rotation shaft (A1) and is movable in the first horizontal direction closer than the first rotation shaft (A1) to a second side of the inlet (22) opposite to the first side.

3. The air conditioner of claim 1 or 2, wherein a first guide groove (36) for guiding movement of the second rotation shaft (A2) of the first filter (100) is formed in the base panel (20) to extend in the first horizontal direction.

4. The air conditioner of claim 3, wherein the first guide groove (36) includes a shaft groove (42) that is recessed downward to restrict a movement of the second rotation shaft (A2) in the first horizontal direction towards the second side of the inlet (22).

5. The air conditioner of claim 4, wherein the shaft groove (36) is at a position overlapping the inlet (22) and/or at a position that is closer to the second side of the inlet (22) than the first rotation shaft (A1).

6. The air conditioner of claim 3, 4 or 5, wherein the first guide groove (36) has an opening groove portion (50) which extends in vertical direction and has an opening (38) formed in a lower side to insert or remove the first filter into or from the base panel (20).

7. The air conditioner of claim 3, 4, 5 or 6, wherein the first filter (100) comprises a filter frame (102) and a filter net (128) disposed in the filter frame (102),
wherein a shaft protrusion (122) extends from the frame (102) in a second horizontal direction parallel to the rotation axis defined by the second rotation shaft (A2) and forms the second rotation shaft (A2),
wherein the filter frame (102) further comprises a filter hook (126) configured to engage with the base panel (20) for maintaining the first filter (100) mounted in the base panel (20),
wherein the filter hook (126) is disposed at one side of the filter frame (102) and the shaft protrusion (122) is disposed at the other side of the filter frame (102) opposite to the one side such that the filter hook (126) and the shaft protrusion (122) are spaced apart from each other in the first horizontal direction.

8. The air conditioner according to any one of the preceding claims, wherein the inlet grill (80) comprises:
a cover plate (82) having a plurality of suction holes (88);
a grill holder (90) disposed at one side of the cover plate (82) and comprising a shaft (92) forming the first rotation shaft (A1); and
a panel hook (96) configured to couple the cover plate (90) to the base panel (20).

9. The air conditioner of claim 8, wherein the base panel (20) includes a grill hanger (26) adjacent to the inlet (22) for seating the grill holder (90) therein, wherein the grill hanger (26) comprises:
a bottom plate (28) on which the shaft (92) is seated;
a first stopper (30) configured to restrict a movement of the shaft (92) in the first horizontal direction away from the inlet (22); and
a second stopper (32) which restricts a movement of the shaft (92) in the first horizontal direction towards the inlet (22),
wherein a rib groove through which the grill holder (90) passes is formed in the second stopper (32).

10. The air conditioner according to any one of the preceding claims, further comprising a second filter (130) for removing foreign substances in air having passed through the first filter (100) and having a third rotation shaft (A3) to be rotatably supported at or on the base panel (20).

11. The air conditioner of claim 10, wherein the third rotation shaft (A3) extends parallel to the first rotation shaft (A1) and/or the second rotation shaft (A2), and/or wherein the third rotation shaft (A3) is disposed above the first rotation shaft (A1) and/or above the second rotation shaft (A2).

12. The air conditioner of claim 10 or 11, wherein the third rotation shaft (A3) is movable in the first horizontal direction closer to the second side of the inlet (22) and/or closer to a vertical center line of the inlet (22) than the first rotation shaft (A1) and/or the second rotation shaft (A2).

13. The air conditioner of claim 10, 11 or 12, further comprising:
a filter housing (60) which is disposed at an upper side of the base panel (20) and in which the second filter (130) is rotatably mounted,
wherein a second guide groove (64) for guiding a movement of the third rotation shaft (A3) of the second filter (130) is formed the filter housing (60) to extend in the first horizontal direction.

14. The air conditioner of claim 13, wherein the second guide groove (64) comprises:
a second sliding groove (68) extending in the first horizontal direction; and
a second bending groove (72) having a shape bent upward at a rear end of the second sliding groove (68) to limit a movement of the third rotation shaft (A3) in the first horizontal direction towards the second side of the inlet (22),
wherein a first guide groove (36) for guiding movement of the second rotation shaft (A2) of the first filter (100) is formed in the base panel (20),
wherein the first guide groove (36) comprises a first sliding groove (46) extending in the first horizontal direction and a shaft groove (42) that is formed at a rear end of the first sliding groove (46) and recessed downward to limit a movement of the second rotation shaft (A2) in the first horizontal direction towards the second side of the inlet (22),
wherein the rear end of the second sliding groove (68) is disposed closer to the second side of the inlet (22) than the rear end of the first sliding groove (46.

15. The air conditioner according to any one of the preceding claims, further comprising a deodorization filter (160) disposed above the first filter (100) and/or above the second filter (130),
wherein the deodorization filter (160) is disposed at a position that is closer to the second side of the inlet (22) than a position to which at least one of the first rotation shaft (A1), the second rotation shaft (A2) and third rotation shaft (A3) is movable to be closest to the second side of the inlet (22).
